# EUROPEAN PATENT APPLICATION

(11) **EP 2 647 276 A1**
(43) Date of publication of application: **09.10.2013**
(21) Application number: 13162146.8
(22) Date of filing: 03.04.2013
(51) Int. Cl.: A01D 34/23

(54) **A header and crop divider knife**

(30) Priority: 05.04.2012 US 201213439947
(71) Applicant: DEERE & COMPANY, Moline, Illinois 61265-8098 (US)
(72) Inventor: Coon, Steve A, Moline, IL Illinois 61265 (US); Lovett, Benjamin M, Colona, IL Illinois 61241 (US); Anderson, Shane Marty, Syracuse, UT Utah 84075 (US)
(74) Representative: Holst, Sönke

(57) **Abstract**

A header (102) has an elongate laterally extending frame (104) and two forwardly extending crop dividers (116, 118) at each end. A gear box (120, 122) is mounted on the front of each crop divider (116, 118). The gearbox (120, 122) has two output shafts (148, 152), a first shaft (148) that is coupled to and drives an elongate reciprocating knife (112) extending across the leading edge of the draper header (102) and a second shaft (152) that is coupled to and drives a crop divider knife (128, 129). The crop divider knife (128, 129) includes a quick coupling (144) that engages a quick coupling (154) mounted on the second shaft (152).

## Description

This invention relates to platform headers for agricultural combines. More particularly, it relates to crop divider knives for platform headers.

Platform headers are used to cut non-row crops, such as wheat, rapeseed, flax, oats, and soybeans. Draper headers generally have a horizontal and laterally extending frame with a forward edge to which an elongate reciprocating knife is attached. This reciprocating knife includes at least one reciprocating bar to which a plurality of blades is attached that extends across substantially the entire width of the draper header. As these blades are driven in reciprocation, they engage stationary knife guards. The stationary knife guards are fixed to the leading edge of the header is well. The reciprocating blades, typically triangular, chop off the stalks of the crop plants very close to the ground. The severed crop plants fall backwards onto a moving conveyor belt which carries them to the outlet of the header, or are fed to the center of the header by a transverse auger conveyor.

Some crop plants are extremely high, such as canola or rapeseed. These plants can reach 2-3 meters in height. They are also relatively weak. As a result, in strong winds (or late in the growing season) they may fall to one side or the other, becoming enmeshed with their neighboring plants.

This enmeshment poses a problem in the crops are harvested. As the draper header harvesting the plants moves through the field, some of the plants may wind up draped over the end covers of the header if these plants are enmeshed with the stalks of the plants next to them, they will be uprooted and dragged along behind the header, dangling from the sides of the header. As the header proceeds further down the field, this bedraggled mass hanging from each end of the header will eventually be lost and unharvested. To solve this problem, manufacturers devised a crop divider knife that was disposed above or on a crop divider to cut through the crop plants at the point they would be draped across the crop divider, thereby preventing the plants from being draped across the crop divider and forcing them to fall to one side or the other of the crop divider.

Crop divider knives are generally vertically oriented, although they may be angled backward on top of the crop divider or slightly inwardly or outwardly. Variations from vertical may be provided to enhance the crop divider knife's ability to sever the crop riding up on top of the crop divider.

DD 215 449 A1 discloses a generally vertically oriented crop divider knife that is driven by one end of a platform reel. This crop divider knife is disposed vertically, or angled slightly forward, ahead of the crop divider itself.

DE 31 39 601 C2 discloses a generally vertically oriented crop divider knife disposed at one end of a platform header and ahead of the crop divider. This arrangement is driven by an elongated rotating shaft, which extends rearward to an offset arm. The offset arm is disposed in a U-shaped slot in a reciprocating knife back of the crop divider knife that extends across the front lower edge of the header.

DE 102 31 072 A1 discloses a reclining crop divider knife located along the top of the crop divider and extending backward in a generally recumbent orientation with individual triangular blades extending upward. In this arrangement, the crop divider divides the crop to the left and right side of the crop divider, and as the crop plants are dragged up the crop divider top surface, the reclining crop divider knife severs the stalks and permits them to fall to either side of the crop divider in conventional fashion.

Further reference is made to the prior art described in DE 94 22 102 U1, DE 199 30 099 A1 and DE 10 2004 021 797 A1.

None of these disclose a crop divider knife driven by a gear box that also drives the horizontal reciprocating knife that extends across the leading edge of the header adjacent to the ground.

What is needed, therefore, is a platform header having generally vertical reciprocating knives disposed at either end of the header that are directly driven by the gear box that also drives the horizontal reciprocating knife. It is an object of this invention to provide such a system in the embodiment claimed in Claim 1. The additional claims provide further variations of this system that provide additional advantages to be discussed in further detail below.

A platform header is provided having a frame that extends generally perpendicular to the direction of travel of the header. A reciprocating knife is disposed along a lower leading edge of the frame. It extends parallel to the ground over substantially the entire width of the header. The frame includes two forwardly extending crop dividers that are disposed at either lateral end of the frame. Gear boxes are fixed to each of these crop dividers. The gear boxes drive the reciprocating knife, which is typically split in the middle so each gear box can drive one-half of the reciprocating knife. The gear boxes are powered by back shafts that extend laterally across the back of the draper header. Drive shafts or belts connect these back shafts to the gear boxes. These drive shafts or belts extend from the rear of the platform forward to the gear boxes. The gear boxes have an output shaft that extends forwardly from the gear boxes. These output shafts are configured to connect to crop divider knife.

Two removable crop divider knives are fixed at each end of the draper header adjacent to the reciprocating knife and extending generally upward therefrom, with one removable knife being fixed to each of the forwardly extending frame members. The crop divider knives are coupled to output shafts extending from the gear boxes. Couplings are provided on the output shafts to engage a mating coupling on the crop divider knives. In this manner the gear boxes provide power directly to the crop divider knives and to the reciprocating knife disposed across the front of the draper header.

In accordance with a second aspect of the invention up draper header having a direction of travel through a field harvesting crops comprises an elongate frame that extends laterally with respect to the direction of travel; a first crop divider coupled to and extending forwardly from the elongate frame; a first gear box mounted on a forward end of the first crop divider, said gear box having a first input shaft, a first output shaft and a second output shaft; A first crop divider knife mounted on a forward end of the first crop divider and coupled to the first output shaft of the first gearbox to be driven thereby; a reciprocating knife supported on the frame of the draper header and extending laterally along the leading edge of the draper header and coupled to the second output shaft to be driven thereby.

The draper header may further comprise a first quick coupling extending rearward from the first crop divider knife and a second quick coupling extending forward from the first output shaft, wherein the first quick coupling and the second quick coupling are interengaged to communicate power from the first gear box to the first crop divider knife. The draper header may further comprise a spring to bias the first quick coupling and the second quick coupling together. The first crop divider knife may further comprise a knife support having a lower end that is removably fastened with threaded fasteners to a forward end of crop divider 116. The first input shaft and the first output shaft may be coaxial. The second output shaft may extend downward from a bottom surface of the gear box.

In accordance with a third aspect of the invention a crop divider knife for a draper header comprises an input shaft having an axis of rotation, wherein the input shaft is configured to receive power from the draper header; a crankshaft coupled to the input shaft; two connecting rods having proximal ends coupled to the crankshaft; two knife backs disposed generally vertically and coupled to distal ends of the connecting rods to be driven in out of phase reciprocating motion; and a plurality of knife elements fixed to the two knife backs; wherein the input shaft is configured to engage a first output shaft of a reciprocating knife drive gear box fixed to a forward end of the crop divider, wherein the reciprocating knife drive gear box has a second output shaft configured to drive a laterally-extending reciprocating knife disposed along the leading edge of the draper header.

The crop divider knife may also comprise a first coupling mounted on the input shaft that is configured to receive power from a second coupling on the gear box when the crop divider knife is mounted on the draper header. The input shaft may be configured to be coaxial with the first output shaft when the crop divider knife is mounted on the draper header. The crop divider may further comprise a knife support having a lower end that is removably fastenable with threaded fasteners to a forward end of the crop divider. The input shaft may be configured to be driven in rotation by the first output shaft. The first coupling may be spring-loaded to maintain the engagement of the first coupling with a second coupling when the crop divider knife is mounted on the draper header. The gear box may have a second output shaft configured to drive a laterally extending reciprocating knife that is disposed along the leading edge of the draper header.

An embodiment of the invention is shown in the drawings, in which:
Figure 1 is a perspective front view of a draper header in accordance with the present invention.
Figure 2 is a close-up fragmentary perspective view of the draper header of Fig. 1 showing the left side vertical reciprocating knife.
Figure 3 is a close-up fragmentary perspective view of the draper header of Figs. 1-2 showing the left side vertical reciprocating knife and a partially cross-section to view of the gear box that drives the horizontal and vertical reciprocating knives.
Figure 4 is a close-up fragmentary perspective view of the draper header of Figs. 1-3 with a vertical reciprocating knife removed.
Figure 5 is an exploded view of the left side of the draper header of Figs. 1-4 showing the mounting arrangement of the vertical reciprocating knife to the crop divider of the draper header.

As the terms are used herein, "forward", "forwardly", "in front" or similar terms are made in reference to the direction of travel of the draper header as it travels through the field in a straight line harvesting crop. The terms "backward", "back", "behind" or similar terms refer to a direction opposite the direction of travel. The terms "lateral", "laterally", "side-to-side" and like terms refer to a direction perpendicular to the direction of travel.

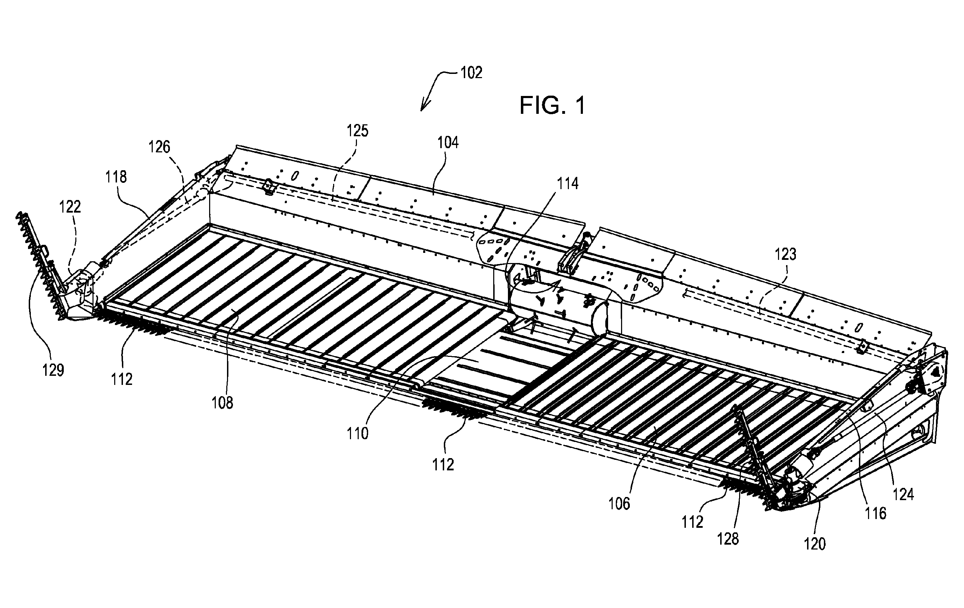

Figure 1 shows a draper header 102 for mounting on an agricultural combine (not shown). The draper header 102 has a frame 104 that extends laterally and perpendicular to the direction of travel "V" of the combine through the field. The frame supports left side conveyor 106, right side conveyor 108, and a center conveyor 110.

A reciprocating knife 112 is fixed to a forward edge of the frame (or members that extend forward from the frame) and extends across substantially the entire width of the draper header. The reciprocating knife is disposed to sever the stalks of plants close to the ground and permit them to fall backwards on the conveyors. The left and right side conveyors, in turn, convey this cut crop material laterally inwardly toward the center conveyor 110 which then conveys the cut crop material rearward through an aperture 114 in the frame 104 of the draper header and thence into the agricultural combine (not shown) that carries the draper header through the field harvesting crop.

Two crop dividers 116, 118 extend forward from the frame 104 on the left and right side of the draper header. These crop dividers are fixed rigidly to the frame 104 and extend forward therefrom.

Alternatively, crop dividers 116, 118 are pivotally coupled to frame 104 such that they move up and down to follow the surface of the agricultural field over which the draper header travels when it is harvesting crop.

The crop dividers serve an additional function. They support gear boxes 120, 122 that are mounted at the forward ends of the crop dividers.

The gear boxes 120, 122 are driven by drive shafts 124, 126 that extend generally horizontally forward from the rear of the frame 104 of the draper header. These drive shafts are generally horizontally disposed. Their rear ends are coupled too and are driven in rotation by cross shafts 123, 125. The cross shafts, in turn, are driven by the engine of the agricultural combine to which the draper header is attached.

The gear box 120 is coupled to and drives crop divider knife 128 and the left side portion of reciprocating knife 112. The gear box 122 is coupled to and drives crop divider knife 129 and the right side portion of reciprocating knife 112. Reciprocating knife 112 is split at the middle of the draper header to permit the two gear boxes to separately drive a portion of the reciprocating knife 112.

Crop divider knife 128 and crop divider knife 129 have the same construction. For this reason, the description below is directed only to the crop divider knife 128. The statements made below about crop divider knife 128 and its various drive arrangements are equally applicable to crop divider knife 129.

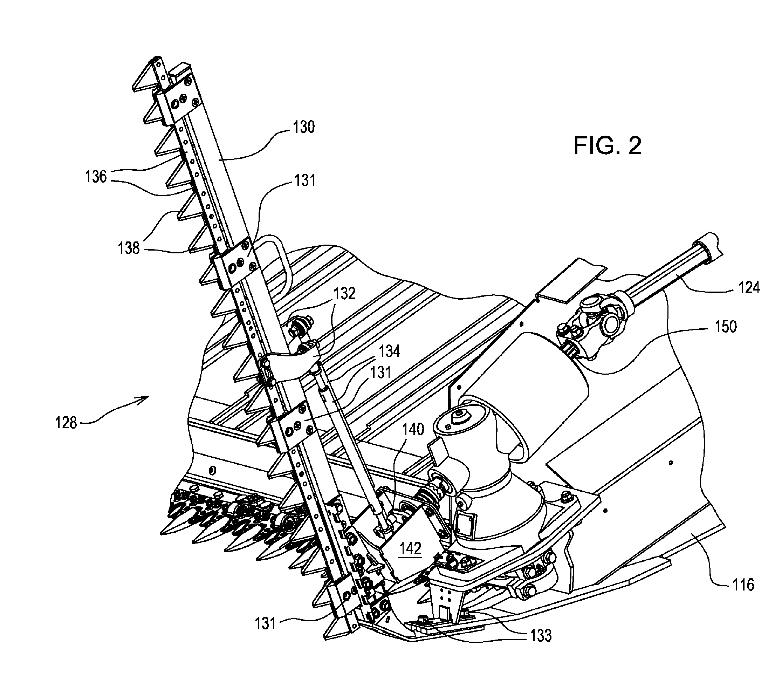

Referring to Figures 1 and 2, crop divider knife 128 comprises a knife support 130, drive brackets 132, connecting rods 134, knife backs 136, knife elements 138, crankshaft 140, crankshaft housing 142, input shaft 143, coupling 144, and mounting bracket 146.

Knife support 130 extends upwardly from the forward end of crop divider 116. A lower end of knife support 130 is removably fastened with threaded fasteners 133 to a forward end of crop divider 116. Knife support 130 extends vertically. Knife support 130 may also be provided with a forward or rearward inclination to enhance its operations severing certain crops.

Knife support 130 supports reciprocating knife backs 136. Reciprocating knife backs 136 are elongate rigid members to which a plurality of knife elements 138 are bolted. Knife elements 138 have cutting edges that engage and sever the portion of the crop hanging over the crop divider 116. The plurality of knife elements 138 are fixed to the knife back and are spaced along substantially the entire length of the knife back.

The two reciprocating knife backs 136 are disposed in an abutting relationship such that plant stalks can be trapped between knife elements 138. Knife elements 138 are disposed on adjacent knife backs 136. Plant stalks are captured and severed between the knife elements 138 fixed on adjacent knife backs as those knife backs 136 reciprocate with respect to each other. A plurality of knife back guides 131 are fixed to knife support 130. Knife back guides 131 support the knife backs 136, holding the knife backs and therefore the knife elements in an abutting relationship while providing enough slack that the knife backs can reciprocate back and forth parallel to the longitudinal extent of the knife backs 136.

Two drive brackets 132 are fixed to the two knife backs 136 to drive the knife backs 136 and knife elements 138. The drive brackets are fixed to and driven by two connecting rods 134. Connecting rods 134 connect the drive brackets 132 to the crankshaft 140.

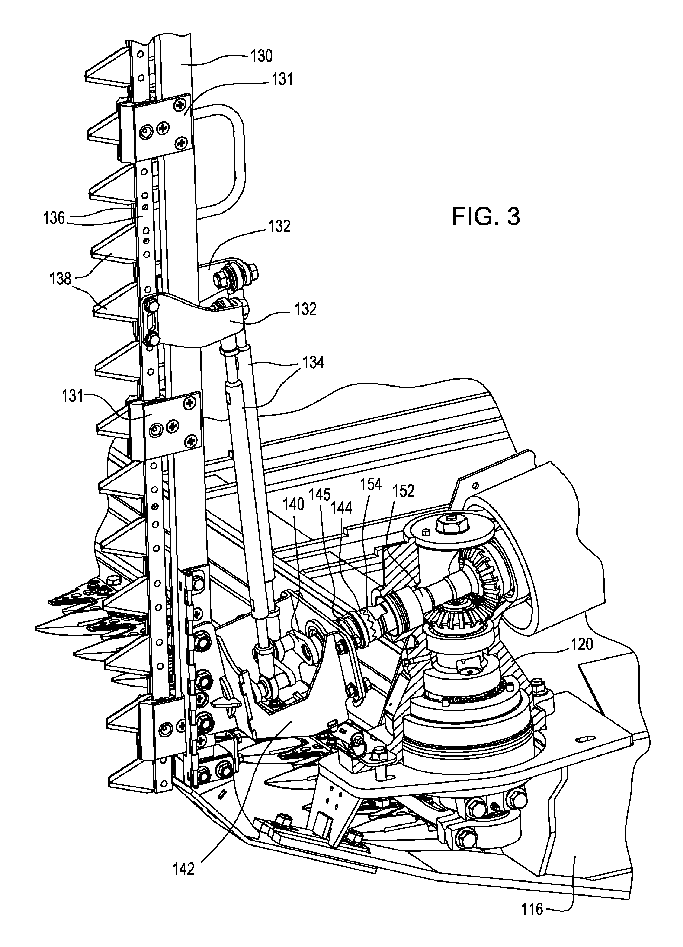

Referring to Figures 2 and 3, crankshaft 140 is supported on bearings in crankshaft housing 142. Crankshaft 140 has two offset shaft sections on which the lower ends of connecting rods 134 are rotatably supported. As crankshaft 140 is driven in rotation, it causes the upper ends of connecting rods 134 to reciprocate back and forth 180° out of phase with each other, thereby causing one reciprocating knife back to move upward as the other reciprocating knife back moves downward, and then when each reciprocating knife back 136 reaches the limit of its motion, to reverse these directions.

Crankshaft housing 142 is fixed to knife support 130. The rear end of crankshaft 140 extends through crankshaft housing 142 to face in a rearward direction. The rear end of crankshaft 140 has a coupling 144. Coupling 144 is mounted to slide along crankshaft 140. It is biased in a rearward direction by spring 145. Coupling 144 is configured to engage a mating coupling 154 extending from gear box 120. In this manner, the mating coupling 154, rotates coupling 144, which in turn rotates crankshaft 140 and drives the crop divider knife. The couplings 144 and 154 are preferably quick couplings, e.g. couplings having teeth, splines, slots, or other surface features that permits them to be engaged and communicate power from one coupling to the other by merely aligning the longitudinal axes (in this case, the rotational axes) of the couplings to be coaxial and pushing them together and into engagement.

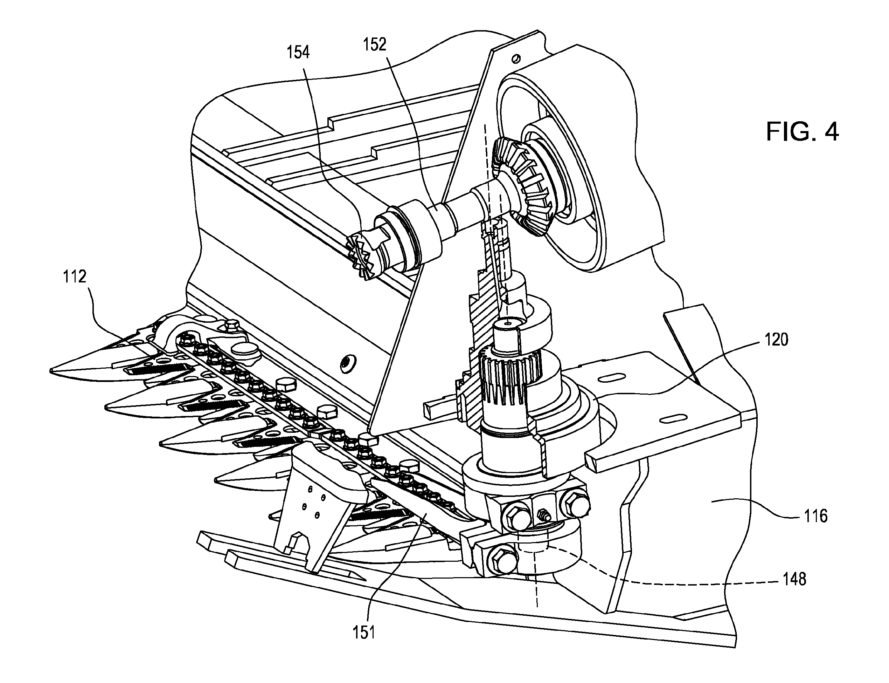

Referring to Figures 2 and 3, the gear box 120 is removably fastened to a forward portion of crop divider 116 with threaded fasteners 147. Gear box 120 has a first output shaft 148 (Fig. 4) that extends downward from the bottom of the gear box 120 through a hole in crop divider 116. The first output shaft 148 is removably fastened to a drive member 151 that is connected to and drives the reciprocating knife 112.

The left half of reciprocating knife 112 is driven by gear box 120. The right half of reciprocating knife 112 is driven by gear box 122.

The two gear boxes 120, 122 are synchronized such it they run 180 degrees out of phase: as one gear box 120, 122 is driving its half of reciprocating knife 112 to the left, the other gear box is driving its half of reciprocating knife 112 to the right and vice versa. In this manner, the reciprocating movements of the two halves of reciprocating knife 112 cancel each other out and vibrations are substantially reduced.

The reciprocating knife halves 112 may meet at the middle of the draper platform, or (preferably) overlap slightly in order to ensure full cutting of the entire swath of crop approaching the leading edge of the draper header.

Drive shaft 124 is coupled to an input shaft 150 extending from gear box 120. In an alternative arrangement, driveshaft 124 is not used, and in its place an endless belt is connected between a pulley mounted on the outer end of back shaft 123 and a pulley that is located on the gear box 120. The input shaft 150 of the gear box 120 extends outward from the left side of the gear box 120 and supports the pulley coupled to the endless belt.

Unlike prior art arrangements for driving knives located on a crop divider of a draper header, power is supplied to gear box 120 that is located at the front of the draper platform on one of the crop dividers and the gear box 120 splits this input power into two output power paths. The first output path is through output shaft 148 located at the bottom of gear box 120 and drives reciprocating knife 112. The second output path is through second output shaft 152 which extends from the front of gear box 120. Output shaft 152 has a coupling 154 that engages coupling 144 fixed to the input shaft 143 of the crankshaft 140.

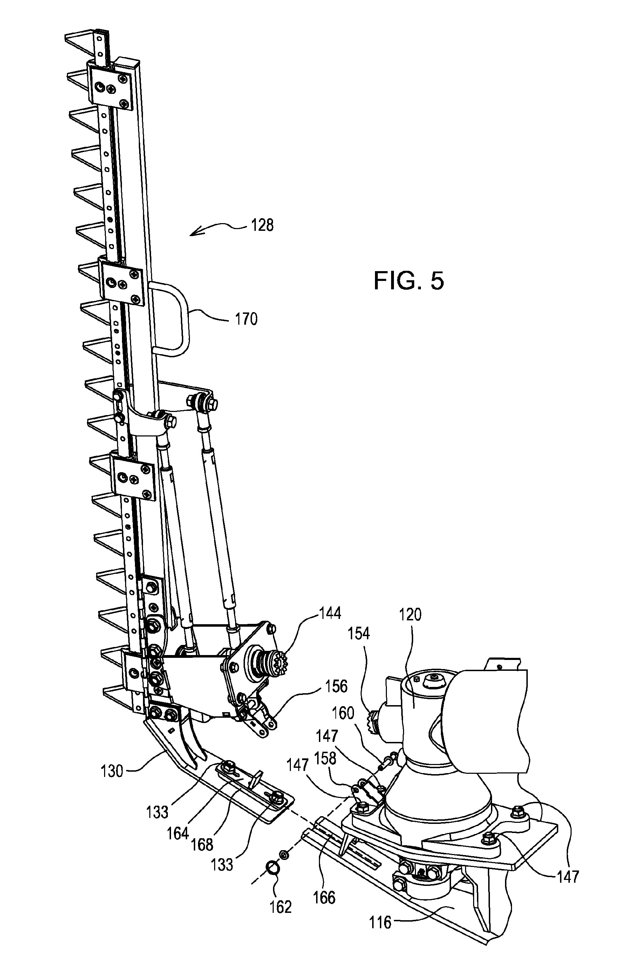

In Figure 5, the crop divider knife 128 is shown slightly separated from the crop divider 116 in its assembly position. A first support bracket 156 is provided on crop divider knife 128 at its lower end that mates with a second support bracket 158 provided on crop divider 116. The two brackets are interengaged and a pin 160 is inserted through both brackets to hold them together. The pin is received in holes having a longitudinal axis. The holes are disposed in the two brackets 156, 158. When the pin is received in the holes, the holes are coaxially aligned. This alignment occurs when the crop divider knife 128 is supported on the crop divider 116 and the knife is in its operating position. Once received and the hold, a securing ring 162 is inserted into an aperture in the pen to prevent it from being removed.

A slot 166 is provided in a leading edge of the crop divider 116. The slot extends generally fore-and-aft. A plate 168 formed in the lower portion of knife support 130 is sliding lee received in slot 166. An upper plate 164, slightly larger in lateral dimensions them the slot 166 is retained on top of upper plate 164 by fasteners 133. To assemble the crop divider knife 128 to the crop divider 116, the crop divider knife 128 is lifted up by a handle 170 that is fixed to the knife support 130. Handle 170 is fixed to knife support 130 such that, when lifted by handle 170, the crop divider knife 128 pivots under its own weight into the mounting position shown in Figure 5. In this position, the operator can move handle 170 backwards guiding the crop divider knife in the rearward and slightly downward direction of the dashed line extending between the crop divider knife 128 and the crop divider 116. The operator continues moving the crop divider knife 128 in this direction until plate 168 slides into slot 166 with upper plate 164 abutting the top surface of slot 166. During this movement, the engagement elements (here shown as teeth) in couplings 144, 154 are forced into engagement, thus coaxially aligning the two couplings 144, 154 and interengaging the couplings to transmit rotary power from the gear box 120 to the crop divider knife 128.

By moving the crop divider knife 128 in one direction with one fluid move while supporting the crop divider knife assembly with one hand supporting one handle, the crop divider knife has been mounted and the drive elements of the crop divider knife and the crop divider are mutually interengaged. This process provides the quick coupling and quick and coupling of the crop divider knife 128 to the crop divider 116.

At this point the only remaining steps or to secure the crop divider which is currently mounted in its mounted and operating position. The operator does this by inserting pin 160 through the aligned holes in brackets 156, 158. Since the crop divider 116 is a supporting the entire way to the crop divider knife 128, the operator can release the handle 170, drop to his knees and jostle the crop divider knife 128 back-and-forth as he inserts the pin 160 through the holes in the brackets 156, 158. The operator can now tighten fasteners 133 and insert securing ring 162 into pin 160, thereby securing the crop divider knife 128 firmly to crop divider 116. What has in the past been a two or three person job, is now a job that can be accomplished quickly by a single person.

## Claims

1. A header (102) having a direction of travel through a field for harvesting crops comprising:
an elongate frame (104) that extends laterally with respect to the direction of travel;
a first crop divider (116, 118) coupled to and extending forwardly from the elongate frame (104);
a first gear box (120, 122) mounted on a forward end of the first crop divider (116, 118), said gear box (120, 122) having a first input shaft (150), a first output shaft (152) and a second output shaft (148);
a first crop divider knife (128, 129) mounted on a forward end of the first crop divider (116, 118) and coupled to the first output shaft (148) of the first gearbox (120, 122) to be driven thereby;
a reciprocating knife (112) supported on the frame (104) of the header (102) and extending laterally along the leading edge of the header (102) and coupled to the second output shaft (148) to be driven thereby.

2. The header (102) of claim 1, further comprising a first quick coupling (144) extending rearward from the first crop divider knife (128, 129) and a second quick coupling (154) extending forward from the first output shaft (152), wherein the first quick coupling (144) and the second quick coupling (154) are interengaged to communicate power from the first gear box (120, 122) to the first crop divider knife (128, 129) and drive the first crop divider knife (128, 129) thereby.

3. The header (102) of claim 2, further comprising a spring (145) to bias the first quick coupling (144) and the second quick coupling (145) together.

4. The header (102) of claim 3, wherein the first crop divider knife (128, 129) further comprises a knife support (130) having a lower end that is removably fastened with threaded fasteners (133) to a forward end of crop divider (116, 118).

5. The header (102) of claim 1, wherein the first input shaft (150) and the first output shaft (152) are coaxial.

6. The header (102) of claim 5, wherein the second output shaft (148) extends much as downward from a bottom surface of the gear box (120, 122).

7. A header (102) preferably according to one of claims 1 to 6, the header (102) having a direction of travel through a field for harvesting crops and comprising an input shaft (143) having an axis of rotation, wherein the input shaft (143) is configured to receive power from the header (102) for driving knife elements of the crop divider knife; a crankshaft (140) coupled to the input shaft (143); two connecting rods (134) having proximal ends coupled to the crankshaft (140); two knife backs (136) disposed generally vertically and coupled to distal ends of the connecting rods (134) to be driven in out-of-phase reciprocating motion; and a plurality of knife elements (138) fixed to the two knife backs; wherein the input shaft (143) is configured to engage a first output shaft (152) of a gear box (120, 122) located at a forward end of the crop divider (116, 118).

8. The header (102) of claim 7, further comprising a first coupling (144) mounted on the input shaft (143) that is configured to receive power from a second coupling (154) on the gear box (120, 122) when the crop divider knife (128, 129) is mounted on the draper header (102).

9. The header (102) of claim 8, wherein the input shaft (143) is configured to be coaxial with the first output shaft (152) when the crop divider knife (128, 129) is mounted on the draper header (102).

10. The header (102) of claim 9, further comprising a knife support (130) having a lower end that is removably fastenable with threaded fasteners (133) to a forward end of the crop divider (116, 118).

11. The header (102) of claim 8, wherein the input shaft (143) is configured to be driven in rotation by the first output shaft (152).

12. The header (102) of claim 11, wherein the first coupling (144) is spring-loaded to maintain the engagement of the first coupling (144) with a second coupling (154) when the crop divider knife (128, 129) is mounted on the draper header (102).

13. The header (102) of claim 7, wherein the gear box (120, 122) has a second output shaft (148) configured to drive a laterally extending reciprocating knife (112) that is disposed along the leading edge of the draper header (102).

14. The header (102) of one of the preceding claims, wherein the header is a draper header.
